# EUROPEAN PATENT SPECIFICATION

(11) **EP 0 557 956 B1**
(45) Date of publication and mention of the grant of the patent: **20.08.1997**
(21) Application number: 93102857.5
(22) Date of filing: 24.02.1993
(51) Int. Cl.: B29C 44/02, B65B 9/08, C08J 9/04

(54) **Compact packaging device for forming foam-filled cushions and related method**
Kompakte Verpackungsvorrichtung zum Herstellen von Kissen aus Schaum und Herstellungsverfahren dafür
Dispositif compact d'emballage pour la fabrication de coussins en mousse et la méthode de réalisation

(30) Priority: 28.02.1992 US 843609
(43) Date of publication of application: 01.09.1993
(73) Proprietor: SEALED AIR CORPORATION, Saddle Brook New Jersey 07662-5291 (US)
(72) Inventor: Sperry, Charles R., Springfield, Vermont 05156 (US); Sperry, Laurence B., Brookline, Massachusetts 02146 (US); Robert, Craig E., Hickory, North Carolina 28601 (US); Seckler, Michael J., Wappingers Falls, New York 12590 (US); Farison, Brian Kent, New Milford, Connecticut 06776 (US); Reichental, Abraham N., Southbury, Connecticut 06488 (US)
(74) Representative: Lieck, Hans-Peter, Dipl.-Ing.

(56) References cited:
- EP-A- 0 316 850
- EP-A- 0 534 457
- US-A- 3 269 278

## Description

### Field of the Invention

This invention relates to cushioned packaging apparatus and techniques and, in particular, relates to a compact device and a method for forming foam cushions of the type in which a foamable composition is added to a bag while the bag is being made and wherein the foamable composition generates gases while hardening so that the result is a plastic bag filled with hardened foam.

### Background of the Invention

The present invention is related to foam-in-place packaging. Foam-in-place packaging is a useful alternative to packaging fragile or other items with loose, friable or dunnage-type materials. As known to those familiar with the packaging arts, there are a number of techniques for packaging fragile articles, most of which have associated advantages and disadvantages.

One advantageous method of easily packaging uniquely shaped items that may not otherwise be packaged in generally rectangular shipping containers, such as cardboard boxes, is referred to as foam-in-place packaging. In its overall application, a foam-in-place packaging system is one in which an item to be cushioned is placed into a container, such as a cardboard box, and then a foamable composition is added to the container. Typical foamable compositions include urethane precursors which, when mixed, generate polyurethane, carbon dioxide, and water vapor. As the urethane forms and hardens, these gases are concurrently generated so that by the time the urethane sets (generally a relatively short period of a few minutes or less) it takes the form of a polymer foam that has expanded to fill the void spaces in the container and to thereby cushion the item being packaged.

In many packaging applications, however, the item being packaged may not be able to tolerate direct contact with either the foam precursors or the foam itself. Furthermore, because the foaming, hardening polymer will tend to expand into all open spaces, some of it may become lodged in undesirable portions of the item being packaged.

Therefore, an early method of foam-in-place packaging included wrapping an item in plastic film prior to addition of the foamable composition. The plastic film protected the items from direct contact with the foamable composition, but was flexible enough so that the foamable composition could still expand and occupy the majority of void space in the container and thereby provide the desired custom-shaped cushion.

In many situations, however, the use of plastic-wrapped items still require that the plastic be placed over the item by hand, and the foam be hand injected by an operator controlling a nozzle connected to a supply of the foam precursors.

Therefore, the need was recognized and addressed to provide a more automated system of foam-in-place packaging. The results have been generally successful and include various devices, including a number assigned to the assignee of the present application. These include the device and method taught in U.S. Patent No. 4,674,268 to Gavronski, No. 4,800,708 to Sperry, and No. 4,854,109 to Pinarer. Each of these patents disclosed a method of producing a plastic bag that was concurrently filled with a foamable composition. Such a bag can be immediately dropped into a packaging carton as the foamable composition begins to create the foamed polymer. Because the foam and the foamable composition is trapped in the bag, contact with the items being packaged is nicely avoided. At the same time, the only manual operation required―indeed if any―is to place such bags in appropriate containers with items to be cushioned.

In another related device, exemplified in European Patent Applicaton No. 0 395 438 (and in corresponding U.S. Patent No. 4,999,975), the foamable compositions are injected between the two sheets of a center-folded web, after which a labyrinth side seal and two transverse seals are used to form the bag for the resulting foam cushion.

Based on the success of these devices, newer devices have been developed which produce generally similar bags, but at greatly increased speed and efficiency. One such recent development is set forth in copending application Serial No. 07/766,810, filed September 26, 1991, to Sperry et al. for "High Speed Apparatus For Forming Foam Cushions For Packaging Purposes." The contents of this application are incorporated entirely herein by reference.

The device set forth in the '810 application is, however, most useful for large scale, high volume packaging operations, and its advantages and suitability for such are appropriate set forth in the '810 application. There are a number of situations, however, where the particular end user does not require the ability to produce large numbers of foam-in-place cushions on a constant basis, but would still appreciate the opportunity to take advantage of the desirable features of foam-in-place packaging. To date, all such foam-in-place packaging apparatus have been fairly large and somewhat sophisticated. Therefore, there exists the need for a straightforward, serviceable, compact and efficient device for forming foam-in-place cushions on either a continuous or intermittent basis, and of which those requiring such services can take maximum advantage.

### Object and Summary of the Invention

Therefore, it is an object of the present invention to provide a compact, efficient, and relatively high speed foam-in-place packaging device that can operate in stand-alone fashion, but which offers many or all of the same advantages to the end-user of more moderate need as do earlier devices for those of more demanding need. The invention meets this object by providing a packaging device according to claim 1.
The invention further provides a method according to claim 11 for forming packaging cushions.

The foregoing and other objects, advantages and features of the invention, and the manner in which the same are accomplished, will become more readily apparent upon consideration of the following detailed description of the invention taken in conjunction with the accompanying drawings, which illustrate preferred and exemplary embodiments, and wherein:

### Brief Description of the Drawing

Figure 1 is an overall perspective view of the packaging device of the present invention;
Figure 2 is a perspective view of a bag formed by the packaging device in Figure 1 and filled with a foamable composition;
Figure 3 is a front elevational view of the packaging device of the present invention;
Figure 4 is a top cross-sectional view taken along lines 4-4 of Figure 3;
Figure 5 is a side elevational view of the packaging device of the present invention;
Figure 6 is a cross-sectional view taken along line 6-6 of Figure 4;
Figure 8 is a cross-sectional view taken along lines 8-8 of Figure 3;

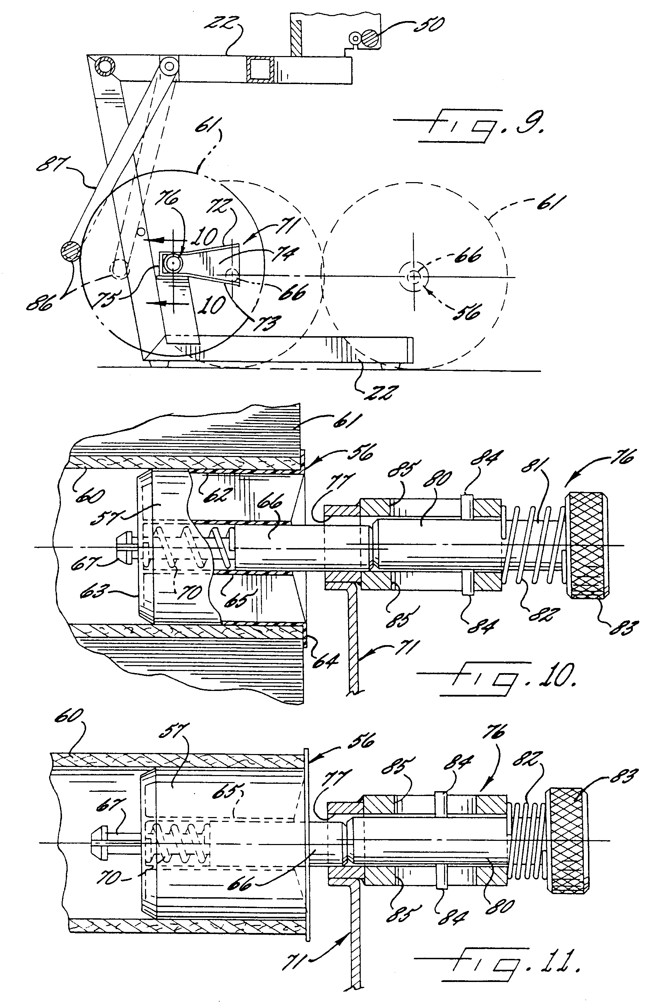

Figure 7 is a cross-sectional view, similar to Figure 6, except illustrating a further progressive step in the transverse sealing and severing steps;

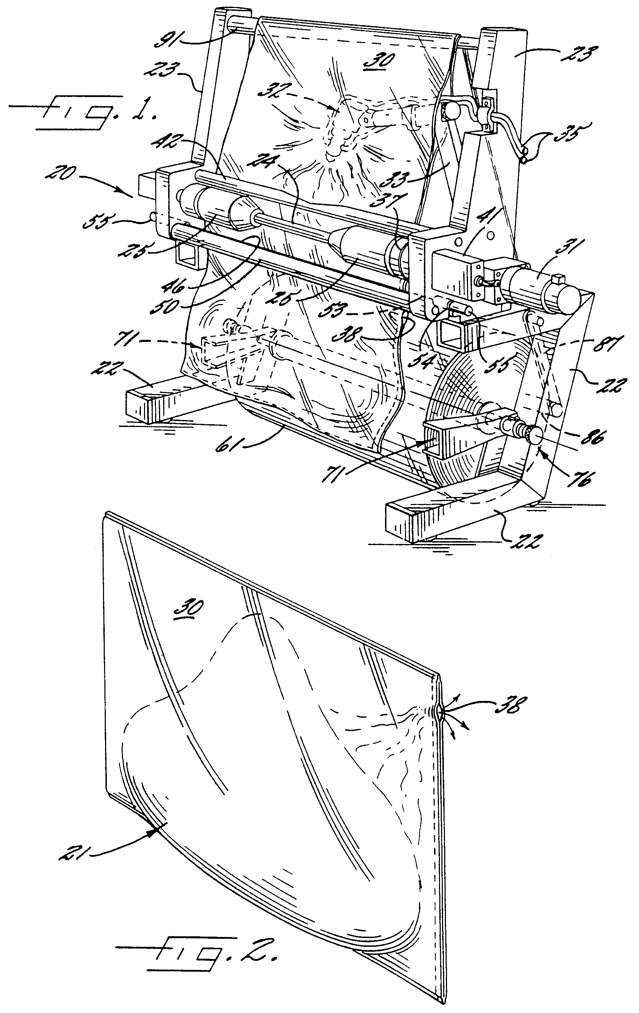

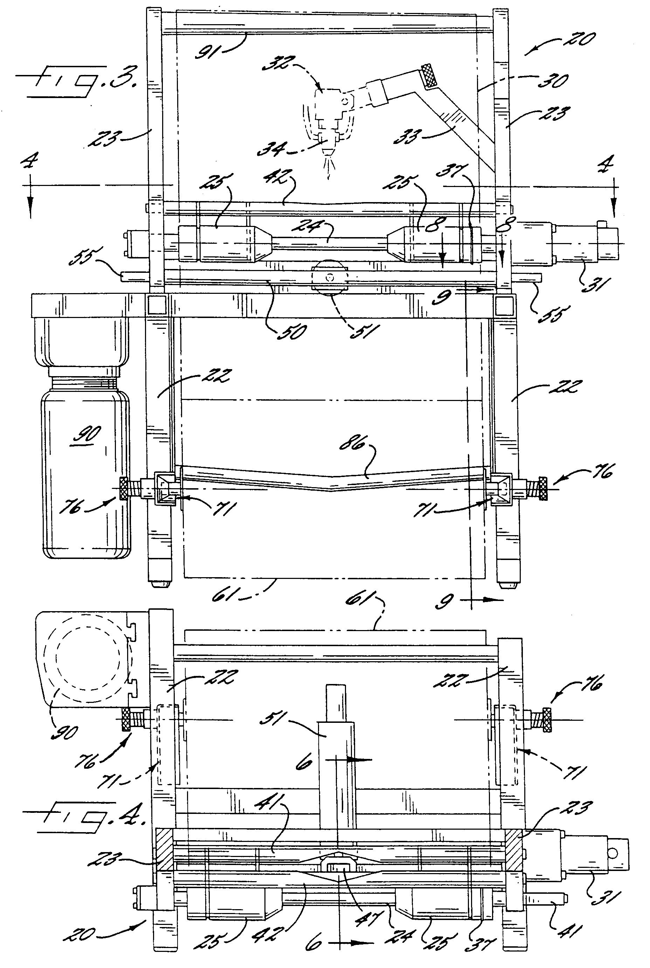

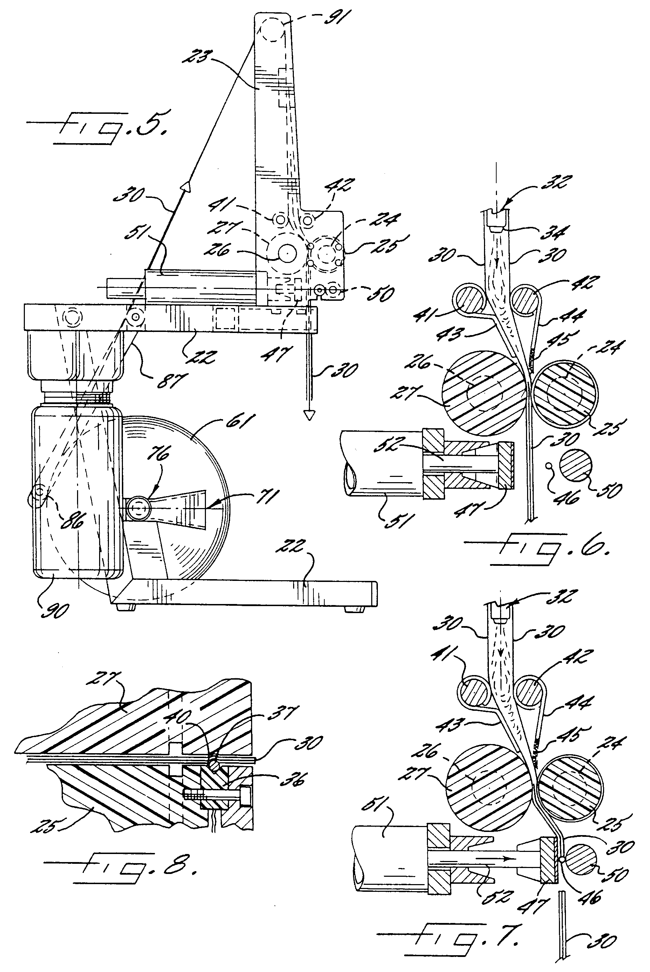

Figure 9 is a cross-sectional view taken along lines 9-9 of Figure 3;
Figure 10 is a cross-sectional view taken along lines 10-10 of Figure 9; and
Figure 11 is a cross-sectional view similar to Figure 10 but showing a different stage of operation of the mechanism.

### Detailed Description of a Preferred Embodiment

The invention is a packaging device broadly designed at **20** in Figure 1. As set forth herein, the device forms packaging cushions of the type that include a plastic bag filled with a solid foam and in which the cushions are initially formed of a plastic bag filled with a foamable material that reacts and then hardens to form solid foam. For purposes of description, the formed bag is broadly designated at **21** in Figure 2. The packaging device **20** is mounted on a frame formed of opposite, identical lower portions **22**, each of which has substantially horizontal and substantially vertical portions, and the mainly vertical upper portions **23**. The frame portions **22**,**23** provide support for the remaining portions of the packaging device to be described herein.

A first element of the packaging device are the means for advancing a sheet of plastic film material that has been center-folded to form a doubled web with one closed edge defined by the center fold and one open edge defined by the adjacent edges of the sheet. The operation of the advancing means is best understood with reference to Figures 1, 6, and 7. Figure 6 is a cross-sectional view which shows two opposing sets of rollers. As illustrated by a series of dotted lines in Figure 6, the advancing means first comprises a first rotatable shaft **24** that carries a polymeric cylinder thereon, to be described later herein, as well as a pair of driven rollers, each designated at **25** in Figures 5, 6 and 7. It will be understood that because Figure 1, for example, is illustrated with a bag being formed, the rollers **25** are not visible in the overall perspective view.

The advancement means further comprises a second rotatable shaft **26** which is more clearly illustrated in Figure 1, Figure 3 and Figure 4. The second rotatable shaft carries a pair of drive rollers **27** that are also illustrated in Figures 1, 3, 4, 6, and 7. The first and second shafts **24**, **26** are positioned sufficiently closely so that rotation of the drive rollers **27** drive the rotation of the driven rollers **25** independently of the presence or absence of plastic film material, illustrated throughout the drawings at **30**, between the drive rollers **27** and the driven rollers **25**. In a preferred embodiment, the drive rollers **27** are formed of a polymer, such as RTV silicone rubber and are, in turn, driven by an appropriate electric motor illustrated in the drawings at **31**.

The packaging device of the present invention also includes means for injecting a foamable composition into the center folded web between the two folded portions of the sheet. The injecting means are broadly designated at **32** in the various drawings and are best illustrated in Figure 3. As seen therein, in preferred embodiments, a bracket **33** is mounted on one of the upright frame members **23** and carries an injection nozzle **34** thereon. Such injection nozzles are described in a number of prior U.S. patents assigned to the assignee of the present invention, and in copending application Serial No. 07/730,708 to *Bertram et al*. for "Improved Cartridge Port Design for Dispensing Foam Precursors" and assigned to the assignee of the present invention. The '708 application is, likewise, incorporated entirely herein by reference, and the injection means will not be further described other than is necessary to describe the overall operation of device. It will be seen in Figure 1, however, that the injection means **32** are appropriately fed with foamable precursors through the hoses **35** illustrated in Figure 1.

One of the advantages of the present invention is the use of the center-folded web material. As can be noted by a comparison of the packaging device **20** of the present invention with those in the prior art and the copending application, several of the other devices form bags from separate opposing sheets of plastic film material. Such use of opposing sheets has its advantages but does require two film supply sources. By incorporating a center-folded plastic film material, the present invention needs only one supply, a factor which permits it to have its compact profile and overall size.

The packaging device of the invention further comprises means for forming a substantially linear seal along the opened edge of the web and substantially parallel to that open edge to thereby longitudinally seal the open edge of the web. The linear sealing means are essentially identical to that set forth in the copending '810 application, but will be briefly described again herein.

As illustrated in cross-section Figure 8, the linear seal forming means comprises a rotatable cylinder **36** that is carried coaxially with the driven rollers **25** on the first rotatable shaft **24**. The rotatable cylinder **36** is positioned to bear against plastic film material **30** and is preferably formed of a thermally conductive polymeric material for dissipating heat quickly therefrom. A sealing wire **37** formed of an electrically conductive material is wrapped around the circumference of the polymeric cylinder **36** and, means are included for raising the temperature of the sealing wire **37** to a heated temperature that will seal plastic film material so that when the plastic film material **30** passes against the cylinder **36**, the heated wire **37** seals it.

The advantages of the rotatable cylinder **36** and the heated wire **37** are fully set forth in the '810 application, but their predominant features can be briefly described as follows. In prior devices, the longitudinal sealing was accomplished by placing heated metal rollers in contact with the plastic film. In order to avoid sealing the plastic film, for example when the machine was stopped or when a vent opening (as described later herein) was to be formed, the metal sealing rollers had to be physically moved out of contact with the plastic film. When sealing was to be resumed, the rollers had to be repositioned against the plastic film. The time periods required to mechanically move the heated rollers limited the overall speed of the device, and the mechanisms required to reciprocate the rollers added to the overall complexity of the device.

In contrast, by using the heat dissipating cylinder **36** and the heated wire **37**, the film can either be sealed or left unsealed by simply providing current to, or withholding current from, the wire **37**. Being formed in an appropriate conductive metal, the wire will heat quickly, and thus respond quickly to the application of current. Similarly, because the cylinder **36** is formed of a thermally conductive material, when sealing is undesired it will quickly draw heat away from the wire to prevent sealing. As a result, because the movement of longitudinal sealing mechanism is limited to rotation in place and in constant contact with the plastic film material **30**, the speed of the device is greatly increased. As set forth in the '810 application, but not otherwise repetitively illustrated herein, the polymeric cylinders **36** include a groove **40** (Figure 8) in the circumference thereof for receiving the sealing wire **37** therein. A spring (not shown) at either end of the sealing wire **37** applies a bias to the wire that maintains it in the groove during expansion and contraction of the wire as its temperature increases and decreases. The groove **40** further includes a spring receiving recess (not shown) for keeping the spring out of contact with plastic film material during sealing. Respective pins (not shown) in the recess attach the springs in place so that the bias of the springs helps maintain the wire in the groove **40** and on the cylinder **36**. It will be understood that a resistance heating wire, such as **37**, will expand and contract slightly during operation, and thus the springs provide an appropriate moderating influence that help keep the wire **37** in place. The sealing wire **37**, the springs, and the pins are formed of electrically conductive materials so that a voltage applied to the pins will be correspondingly applied to the wire to heat the wire as the applied voltage generates a current therethrough.

In a preferred embodiment, the packaging device further comprises means shown as the controller **41** for maintaining an idling voltage in the sealing wire that keeps the wire at a temperature below that at which plastic will seal, but which allows the wire to more quickly reach a sealing temperature upon command. The idling voltage reduces the time required for the wire to change from a sealing to a non-sealing mode. Furthermore, by reducing the wire's temperature changes, the idling voltage likewise reduces the extent and consequences of the wire's thermal excursions. Although not illustrated in the drawings, in the preferred embodiment the wire **37** is wrapped in a slight spiral pattern around the polymeric cylinder **36**. Likewise, in preferred embodiments, the polymeric cylinder further comprises a temperature sensor for monitoring the temperature of the wire. The combination of the application of an idling voltage to the wire **37** and the heat dissipation properties of the polymeric cylinder **36** enhance the ability of the wire to move from a sealing to a non-sealing mode quickly, thus increasing the overall speed with which the packaging device can operate.

Figures 6 and 7 further illustrate some combined features of the advancing means and the longitudinal sealing means. First, the packaging device **20** further comprises a pair of film guides **41**,**42** above the first and second shafts **24**,**26** for receiving the plastic film **30** therebetween so that the plastic film **30** is more efficiently presented to the drive rollers **27** and the driven rollers **25**. The film guides **41**,**42** comprises adjacent bars, as perhaps best illustrated in Figure 4. The bars **41**,**42** are parallel to the first and second shafts **24**,**26** and are positioned laterally away from the position at which the drive rollers **27** and driven rollers **25** meet in a direction toward the drive rollers. The bars **41**,**42** thereby encourage the plastic film material **30** to meet the drive rollers **27** prior to meeting the driven rollers **25** to in turn more effectively drive the advancing plastic film material **30**. It has been discovered in operation that this arrangement greatly enhances the overall advancement steps of the invention.

As further shown in Figures 6 and 7, the film guide bars **41**,**42** further comprise a plurality of downwardly depending guide canes **43**,**44**. The guide canes **43**,**44** further direct the advancing plastic film **30** between the drive rollers **27** and the driven rollers **25** and help prevent the plastic film **30** from wrapping around either of the first or second shafts as it advances downwardly. As illustrated in Figures 5 and 6, some of the guide canes, those illustrated at **44** in this embodiment, have flexible lower portions **45** which help prevent advancing plastic film **30** from tearing as it moves past.

As another detail not otherwise illustrated in this application, but clearly set forth in the incorporated '810 application, the sealing roller system further comprises a plurality of electrical contact rings on one terminal end of the first shaft and in respective electrical contact with the pins and the wires for making electrical contact with a source of electricity and for providing a path for electrical current to flow from a source to the wires to thereby heat the wires to the temperature required to seal plastic film material.

The packaging device **20** of the present invention further comprises means for periodically interrupting the linear seal to provide an unsealed portion along the otherwise sealed edge. As stated earlier herein, the hardened, solid foam is the result of a chemical reaction which produces the eventually solid polymer while currently generating water vapor and carbon dioxide. The carbon dioxide and water vapor desirably form the foam as they escape from the forming polymer. Nevertheless, if the foamable composition were placed in an entirely sealed bag, the volume of gas generated would soon build up sufficient pressure to rupture the bag before the foam had hardened. Such a rupture should, of course, defeat the purpose of using the bag to contain the polymer. Thus, in order to preserve the bag's usefulness, the gases must be permitted to escape in an appropriate manner. One method for appropriately venting the bag is to provide a small, unsealed opening along one edge of the bag. As noted above, in earlier generations of foam-in-place packaging devices, such openings were formed by physically moving the heated sealing rollers into and out of contact with the plastic film material. As just described, however, in the present invention a small, unsealed portion is provided by simply turning down the current to the heating wire **37** so that the wire's temperature drops just below that at which the plastic will become sealed. After a short period of time, the current to the wire **37** is again raised to raise the temperature to that which will seal plastic. The result is that a period of time is established during which the advancing film material **30** is left unsealed. The result, in turn, is a small unsealed opening illustrated at **38** in the side of a finished bag.

Thus, the polymeric cylinder **36** and heated wire **37** described herein provide means for interrupting the linear seal once between each respective transverse seal and the next respective transverse seal to thereby produce bags with one opening in one side edge thereof for venting the gases produced as the foamable composition foams. As further just described, the periodic interrupting means further can interrupt the linear seal while the web is continuously advancing. The interruption is for a time period that represents a small fraction of the time required to seal the open edge between transverse seals. As a result, the opening represents a proportionally small fraction of the length of the overall seal to thereby provide a vent opening large enough for gases to escape, but small enough to substantially prevent foam from escaping from the formed and filled bag.

The packaging device **20** further includes means for transversely sealing the web after foamable composition has been injected and for concurrently separating a formed and filled bag from the advancing foam material. The transverse sealing means is perhaps best illustrated in Figures 6 and 7 and first comprises a cross-cut wire **46** positioned substantially perpendicularly to the respective folded and opened edges of plastic film material **30** advanced by the advancing means. The cross-cut wire severs plastic in contact with the wire **46** when the wire **46** is heated to a temperature that will seal and sever plastic. The wire is formed of an appropriate metal that will become heated when an electrical current is applied. Accordingly, any appropriate means of applying a current will serve as means for heating the wire to a temperature that will sever the plastic film material. Such resistance heating and the temperatures required to seal plastic are well-known to those of ordinary skill in the art and need not otherwise be described, nor do they require undue experimentation to accomplish.

A flexible sealing actuator bar **47** is positioned parallel to the wire. A flexible sealing roller **50** is positioned parallel to the wire **46** and parallel to the actuator bar **47**, but on the opposite side of the wire **46** from the bar **47**. The advancing means described earlier feeds plastic film material between the wire **46** and the flexible sealing roller **50**. A driver illustrated as the two-coil solenoid **51** and its shaft **52** drive the bar **47** against the wire **46** and the wire against the sealing roller **50** to thereby seal and sever plastic film material **30** passing between the sealing wire **46** and the sealing roller **50**. As just noted, the driver for the actuator bar **47** is a two-coil solenoid **51** which preferably drives the actuator bar in opposite directions as desired.

In a preferred embodiment, the means for heating the wire **46** further comprises means for preventing the wire from heating until the actuator bar is in contact with the flexible sealing roller. This is a safety feature described in the '810 copending application which prevents the sealing wire from reaching a temperature that would injure an operator if the operator, for some reason, had their hand in the vicinity of the wire when the packaging device **20** was about to form a transverse seal. The cross-cut wire **46** further comprises a respective spring at each opposite end thereof for mounting the cross-cut wire **46** against the springs' tension. The position of the springs is illustrated by the dotted lines at **53** in Figure 1, and the device further includes means shown as the slots **54** and the knobs **55** for receiving the springs in the upright frame members **23** so that the sealing wire **46** can be positioned and maintained in position in the absence of other attachment. The springs also help maintain the wire **46** taut during the expansion and contraction that accompany its thermal excursions.

Although not illustrated in detail because of the small scale involved, the cross-cut wire **46** further comprises double-wrapped terminal portions for reducing the electrical resistance of the wire at its respective terminal portions. Furthermore, as was the case with the sealing wire **37**, the invention further comprises means for maintaining the sealing wire **46** at an idling temperature that is above ambient temperature, but below the temperature at which sealing takes place. The idling temperature provides for more rapidly raising the sealing wire **46** to sealing temperatures whenever desired and reduces the extent and consequences of the thermal excursions of the wire.

The packaging device **20** of the present invention further comprises means for realeasably carrying a stock supply roll of center-folded plastic film material. In a preferred embodiment, the carrying means comprises means for retaining and releasing a telescoping core plug inserted in the end of a core of a role of web material. Aspects of this are best illustrated in Figures 9, 10, and 11. Furthermore, the telescoping core plug and the means for retaining and releasing it are also further described in US-A-5 322 234, filed concurrently herewith, to *Robert*, *et al*. for "Telescoping Core Plug and Support Therefor," the contents of which are incorporated entirely herein by reference. Such a telescoping core plug is broadly designated at **56** in Figures 10 and 11. The core plug **56** comprises a generally cylindrical body **57** which has a diameter which corresponds substantially to the internal diameter of a core **60** of a supply roll **61** of plastic film material. The cylindrical body **57** can be a substantially hollow, cup-shaped body open at its outer end formed by a circumferential side wall **62** and an end wall **63** at its closed end. Preferably, an annular flange **64** surrounds the circumferential side wall **62** at its open end and serves to keep the core plug **56** from being inserted too far into the core **60** of the supply roll **61**.

The cylindrical body portion **57** further includes a hub portion **65** which defines an axial opening of predetermined diameter extending longitudinally throughout the cylindrical body **57**. In preferred embodiments, the hub portion **65** is formed integrally with the end wall **63** and extends entirely through to the outer end of the cylindrical body portion.

The core plug **56** further includes a spindle member defined by supporting portion **66** and an inward end portion **67**. The spindle member formed by these two portions is telescopically mounted in the axial opening formed by the hub 65 for movement between extended and retracted positions. The end portion **67** projects beyond the outer end of the body portion **57** and preferably has a diameter closely conforming to the predetermined diameter of the axial opening for a snug fit therein while still permitting relative movement. In its extended position, the supporting end portion **66** may be received in a roll support to be described herein when the core plug **56** is placed within the end of the core **60** for supporting one end of the roll as film is advanced throughout the packaging device **20**. The inward end **67** extends through the axial opening defined by the hub **65** in the end wall **63** and has a smaller diameter than the supporting end portion **66** in order to accommodate the spring **70**. As illustrated in Figures 10 and 11, the spring **70** biases the spindle support **66** and the inward end portion **67** towards a position extended from one another, as best illustrated in Figure 10.

The supporting end portion **66** can be received in a roll support, to be described herein, when the cylindrical body **57** of the core plug **56** is placed into the core **60** of a roll of web material **61**.

Thus, in the packaging device **20**, the carrying means for the stock supply roll **61** of center-folded plastic film material first comprises a core plug receiving chute broadly designated in the drawings as **71**. The chute has a top member **72**, a bottom member **73**, a back member **74**, and a rear member **75**, which together define a channel for receiving a core plug such as **56**.

The chute **71** has a seating member broadly designated at **76** and best illustrated in Figures 10 and 11. The seating member **76** has an axial opening **77** of predetermined diameter extending longitudinally through the seating member **76** and the back member **74** of the chute, the axial opening being of a size sufficient to receive the appropriate portions of the core plug **56**.

A plunger **80** is telescopically mounted in the axial opening **77** in the seating member **76** for movement between extended and retracted positions. The plunger **80** includes an end portion **81** that projects beyond the outer end of the seating member **76**. A spring means illustrated as the spring **82** biases the plunger **80** towards its extended position by bearing against the knob **83**. In order to maintain the plunger **80** within the axial opening **77**, however, the plunger **80** is connected to a pair of pins **84** extending radially therefrom which are free to move within defined openings **85** in the seating member **76**.

The telescoping core plug **56** and the seating member **76** compliment one another in operation. As illustrated in Figure 9, a roll **61** of plastic film material can be advanced towards the chute **71**. Preferably, the channel defined by the chute is wider from top to bottom at its receiving end than it is at the end carrying the seating member **76**. Thus, as illustrated in Figure 9, the supporting end **66** of the core plug **56** can engage the chute and be directed towards the seating member **76** as the entire roll **61** is moved towards the rear of the chute **71**. When the spindle support end **66** of the core plug **56** is first introduced into the chute, it will be seen that the spindle support end **66** can be pushed inwardly with respect to the overall core plug **56** to allow it to travel in the chute **71**. When the entire roll **61** reaches the rear of the seating member **76**, the spring **70** biases the spindle support end **66** outwardly and into the axial opening **77** in the seating member **76**. Similarly, because the plunger **80** in the seating member **76** is likewise biased in the same overall direction, the net result is that the telescoping core plug **56** pops into place in the seating member **76** and is maintained satisfactory therein by the spindle support ends **66** biased by the spring **70**.

Alternatively, when the roll **61** empties and must be replaced, the transition can be made rather easily simply by pushing against knob **83** to move plunger **80** inwardly against spindle support **66**, as perhaps best illustrated in Figure 11. When the plunger **80** is pushed inwardly far enough it similarly pushes the spindle support end **66** inwardly sufficiently for the core plug **56** to completely release from the seating member **76**, which in turn permits the entire roll core **60** to be removed and replaced with a new one.

In its preferred embodiments, the packaging device **20** of the present invention further comprises means for applying tension to the web **30** parallel to its direction of advancement to thereby enhance the presentation of the advancing web for sealing the open edge and forming a transverse seal. As illustrated in the drawings, in a preferred embodiment, the tension applying means comprises a roller **86** adjacent the portions of the packaging device **20** that carry the chute **71** and seating member **76**. The roller **86** bears against a supply roll **61** in the seating means **76** and rotates opposite to the supply roll **61** to partially retard the rotation of the supply roll **61** and thereby apply tension to the web **30** being advanced. As best illustrated in Figures 5 and 9, the roller **86** is carried by a pair of arms **87** that depend from, and are pivotably mounted on, the lower frame **22**. It will be seen that the combination of the pivoting arm **87** and the weight of the roller **86** applies a force against a supply roll **61** positioned in the seating means **76** and thus provides a simple, yet effective, means of applying tension to the advancing web.

A number of other items are illustrated in the various figures. Figures 3 and 4 illustrate that the packaging device **20** of the present invention can also include a supply bottle **90** for carrying a solvent. As described in a number of the aforementioned applications which relate to foam injection cartridges, a useful attribute of such cartridges is that they be washed with a cleaning solvent to avoid a build-up of hardened foam on the injection cartridge **32**. Incorporating the solvent supply on the lower frame portions **22** of the packaging device **20** provides an advantageous accessory without otherwise complicating the operation of the packaging device **20** or overly increasing footprint. An appropriate solvent system is described in copending application Serial No. 07/767,033 filed September 26, 1991 by *Spring*, *et al*. for "Improved Pumping and Cleaning System for Foam in Place Injection Cartridges," the contents of which are incorporated entirely herein by reference.

Figures 1 and 3 and 5 also illustrate a preferred path of travel for the plastic film **30** from the supply roll **61** to the injection means **32** and the respective sealing means. As illustrated in Figure 5, the plastic film **30** advances from the supply roll **61** upwardly to an idler roll **91** and then downwardly toward the injection means **32**.

Similarly, there are a number of individual elements which make up the lower frame **22** and the upper frame **23** that have not been specifically recited as their function and position are such that they can be straightforwardly comprehended from the drawings and are not specific to or limiting of the invention other than in providing the overall framework required.

In the drawings and specification, there have been disclosed typical preferred embodiments of the invention and, although specific terms have been employed, they have been used in a generic and descriptive sense only and not for purposes of limitation, the scope of the invention being set forth in the following claims.

## Claims

1. A packaging device (20) for forming packaging cushions of the type that include a plastic bag filled with a solid foam, and wherein the cushions are initially formed of a plastic bag (21) filled with a foamable material that reacts and then hardens to form solid foam, the apparatus comprising:
- means (25, 27) for advancing a sheet (30) of plastic film material that has been center-folded to form a doubled web with one closed edge defined by the center fold and one open edge defined by the adjacent edges of the sheet;
- means (32) for injecting a foamable composition into the center-folded web between the two folded portions of the sheet;
- means (37) for forming a substantially linear seal along the open edge and substantially parallel to the open edge to thereby form a linear longitudinal seal along the open edge of the web;
- means (46) for transversely sealing the web after foamable composition has been injected, and for concurrently separating a formed and filled bag from the advanced film material; and
- means for periodically interrupting the linear seal between each respective transverse seal to provide a linear unsealed portion (38) along the otherwise linearly sealed edge.

2. A packaging device according to Claim 1 wherein said periodic interrupting means comprises means for interrupting the linear seal once between each respective transverse seal and the next respective transverse seal while the web is continuously advancing and for a time period that represents a small fraction of the time required to seal the open edge between transverse seals so that the resulting opening represents a proportionally small fraction of the length of the overall seal, to thereby provide a vent opening (38) in one side edge thereof that is large enough for gases to escape, but small enough to substantially prevent foam from escaping from the formed and filled bag.

3. A packaging device according to Claim 1 or 2 and further comprising:
a core plug receiving chute (71) having a channel for receiving the core plug (56) said channel having top (72), bottom (73), back (74) and rear (75) members;
a seating member (76) integral with one end of said chute, said seating member having an axial opening (77) of predetermined diameter extending longitudinally through the seating member (76) and the back member (74) of said chute, said axial opening (77) being adapted to receive a core plug (56);
a plunger (80) telescopically mounted in said axial opening (77) in said seating member (76) for movement between extended and retracted positions and including an end portion (81) thereof projecting beyond the outer end of said seating member (76);
spring means (82) biasing said plunger member (80) toward its extended position; and
pin means (84) for maintaining said plunger (80) within said axial opening (77);
whereby a telescoping core plug (56) inserted into the end of a core (60) of a roll (61) of web material can be retained and released for thereby releasably carrying a stock supply roll (61) of center folded plastic film material.

4. A packaging device according to Claim 3 and further comprising a roller (86) adjacent said supply roll carrying means for bearing against a supply roll (61) on said carrying means and for rotating opposite to the supply roll to partially retard the rotation of the supply roll and thereby apply a tension to the web (30) being advanced from the supply roll to thereby enhance the presentation of the advancing web for sealing the open edge and forming the transverse seals.

5. A packaging device according to Claim 1, 2, 3 or 4, wherein said linear seal forming means comprises:
a rotatable cylinder (36) positioned to bear against plastic film material advanced by said advancing means and formed of a thermally conductive polymeric material for dissipating heat quickly therefrom;
a sealing wire (37) formed of an electrically conductive material wrapped around the circumference of said polymeric cylinder (36);
means for applying a voltage to said sealing wire (37) to raise the temperature of said sealing wire to a heated temperature that will seal plastic film material, so that when plastic film material passes against said cylinder (36), said heated wire seals the plastic film material; and
means (41) for maintaining an idling voltage in said sealing wire that maintains said wire (37) at a temperature below the temperature at which said wire will seal plastic, but which allows said wire to more quickly reach a sealing temperature upon command, and for reducing the extent and consequences of the thermal excursions of said wire.

6. A packaging device according to Claim 5 and further comprising:
a first rotatable shaft (24) having said polymeric cylinder mounted thereon and a pair of driven rollers (25) adjacent opposite ends thereof;
a second rotatable shaft (26) parallel to said first rotatable shaft;
a pair of drive rollers (27) on said second shaft and positioned respectively opposite to said driven rollers (25);
and wherein said first and second shafts (24,26) are positioned sufficiently closely for rotation of said drive rollers (27) to drive the rotation of said driven rollers (25) independently of the presence or absence of plastic film material between said drive rollers and said driven rollers.

7. A packaging device according to Claim 6 and further comprising:
a pair of film guides (41,42) in the form of adjacent bars, parallel to said first and second shafts (24,26) and positioned laterally away from the position at which the drive rollers (27) and driven rollers (25) meet in a direction toward the drive rollers to thereby encourage the plastic film material to meet the drive rollers prior to meeting the driven rollers and the polymeric cylinder (36) and to thereby more effectively drive the advancing plastic film material (30); and
a plurality of guide canes (43,44) depending downwardly from said film guide bars (41,42) for further directing an advancing plastic film between said drive rollers and said driven rollers, and for preventing plastic film from wrapping around either of said shafts (24,26) as it advances downwardly, and wherein at least some of said guide canes (44) have flexible lower portions (45) for preventing advancing plastic film from tearing whenever it engages said flexible lower portions.

8. A packaging device according to anyone of Claims 1-7 and wherein said transverse sealing means comprises:
a crosscut wire (46) positioned substantially perpendicularly to the position of plastic film material advanced by said advancing means for severing plastic in contact with said wire when said wire is heated to a temperature that will seal and sever plastic;
means for heating said wire (46) to a temperature that will sever plastic film material;
a flexible sealing actuator bar (47) parallel to said wire;
a flexible sealing roller (50) parallel to said wire and said bar, and on the opposite side of said wire from said bar; and
a driver in operative connection to said actuator bar for driving said bar against said wire and said wire against said sealing roller to thereby seal and sever plastic film material passing between said sealing wire and said sealing roller.

9. A packaging device according to Claim 8 wherein:
said driver is a two coil solenoid (51) for driving said actuator bar (47) in opposite directions as desired; and
wherein said means for heating said wire further comprises,
means for preventing said wire from heating until said actuator bar is in contact with said flexible sealing roller (50), and
means for maintaining said sealing wire at an idling temperature that is above ambient temperature, but below the temperature at which sealing takes place to thereby provide for more rapidly raising said sealing wire to sealing temperature whenever desired, and for reducing the extent and consequences of the thermal excursions of said wire.

10. A packaging device according to Claims 8 or 9 wherein said crosscut wire (46) further comprises:
a respective spring at each opposite ends thereof for spring mounting said crosscut wire against the tension of said springs; and
means (54,55) on said apparatus for receiving said springs so that said sealing wire can be positioned and maintained in position in the absence of other attachment, and for maintaining said wire taut during expansion and contraction of said wire during its thermal excursions.

11. A method for forming packaging cushions of the type that include a plastic bag filled with a foamed polymer, and wherein the cushions are initially formed of a plastic bag (21) filled with a foamable material that reacts and then hardens to form polymer foam, the method comprising:
- advancing a sheet of plastic film material (30) that has been center-folded to form a doubled web with one closed edge defined by the center fold and one open edge defined by the adjacent edges of the sheet;
- injecting a foamable composition into the center-folded web between the two folded portions of the sheet;
- forming a substantially linear longitudinal seal along, and substantially parallel to, the open edge to thereby seal the open edge;
- transversely sealing the web after foamable composition has been injected, and concurrently separating a formed and filled bag (21) from the advanced film material; and
- periodically interrupting the linear seal between each respective transversal seal to provide a linear unsealed portion (38) along the otherwise linearly sealed edge.

12. A method according to Claim 11 wherein the step of periodically interrupting the linear seal to provide an unsealed portion comprises interrupting the linear seal once between each respective transverse seal and the next respective transverse seal while the web is continuously advancing, and for a time period that represents a small fraction of the time required to seal the open edge between transverse seals to thereby produce a bag with one opening (38) in one side edge thereof for venting the gases produced as the foamable composition foams, and so that the resulting opening represents a proportionally small fraction of the length of the overall seal, to thereby provide a vent opening large enough for gases to escape, but small enough to substantially prevent foam from escaping from the formed and filled bag.

## Patentansprüche

1. Verpackungsvorrichtung (20) zum Herstellen von Verpackungskissen, die einen mit festem Schaum gefüllten Kunststoffbeutel aufweisen, wobei die Kissen zu Anfang aus einem Kunststoffbeutel (21) gebildet sind, der mit schäumbarem Material gefüllt ist, das reagiert und sodann zur Ausbildung von festem Schaum erhärtet, mit:
- Mitteln (25, 27) zum Vorwärtsbewegen einer Folie (30) aus Kunststofffilm-Material, das in der Mitte gefaltet worden ist, um eine Doppelbahn mit einem geschlossenen Rand, der durch die Mittelfalte festgelegt ist, und einem offenen Rand zu bilden, der durch die aneinanderliegenden Ränder der Folie festgelegt ist;
- Mitteln (32) zum Injizieren einer schäumbaren Mischung in die in der Mitte gefaltete Bahn zwischen die zwei Faltabschnitte der Folie;
- Mitteln (37) zur Ausbildung einer im wesentlichen linearen Dichtung längs des offenen Randes und im wesentlichen parallel zum offenen Rand, um dadurch eine lineare Längsdichtung längs des offenen Randes der Bahn zu formen;
- Mitteln (46) zum Abdichten der Bahn in Querrichung, nachdem die schäumbare Mischung injiziert worden ist, und zum gleichzeitigen Abtrennen eines hergestellten und gefüllten Beutels von dem vorwärtsbewegten Filmaterial, und
- Mitteln zum periodischen Unterbrechen der linearen Dichtung zwischen jeder entsprechenden Querdichtung, um einen linearen nicht abgedichteten Abschnitt (38) längs des ansonsten linear abgedichteten Randes auszubilden.

2. Verpackungsvorrichtung nach Anspruch 1, bei der die Mittel zum periodischen Unterbrechen Einrichtungen aufweisen, um die lineare Dichtung einmal zwischen jeder einzelnen Querdichtung und der nächsten einzelnen Querdichtung zu unterbrechen, während die Bahn sich kontinuierlich vorwärtsbewegt, und dies für eine Zeitdauer, die einen kleinen Bruchteil der Zeit darstellt, die zum Abdichten des offenen Randes zwischen Querdichtungen erforderlich ist, so daß die resultierende Öffnung einen verhältnismäßig kleinen Bruchteil der Länge der Gesamtdichtung darstellt, um dadurch in einem Seitenrand eine Belüftungsöffnung (38) auszubilden, die zum Entweichen von Gasen groß genug ist, jedoch klein genug ist, um im wesentlichen zu verhindern, daß Schaum aus dem hergestellten und gefüllten Beutel entweicht.

3. Verpackungsvorrichtung nach Anspruch 1 oder 2, ferner mit:
einer Leiteinrichtung (71) zur Aufnahme eines Kern-Steckelementes, mit einem Kanal zur Aufnahme des Kern-Steckelementes (56), der obere (72), untere (73), rückwärtige (74) und hintere (75) Teile aufweist;
einem Befestigungsteil (76), das mit einem Ende der Leiteinrichtung einstückig ausgebildet ist und eine axiale Öffnung (77) mit einem vorbestimmten Durchmesser aufweist, die sich in Längsrichtung durch das Befestigungsteil (76) und das rückwärtige Teil (74) der Leiteinrichtung erstreckt und zur Aufnahme eines Kern-Steckelementes (56) eingerichtet ist;
einem Kolben (80), der teleskopisch in der axialen Öffnung (77) in dem Befestigungsteil (76) für eine Bewegung zwischen ausgefahrenen und zurückgezogenen Stellungen montiert ist und einen Endabschnitt (81) aufweist, der über das äußere Ende des Befestigungsteils (76) hinausragt;
Federmitteln (82), die das Kolben-Bauteil (80) zu seiner ausgefahrenen Stellung hin vorspannen und
stiftförmigen Mitteln (84) zum Halten des Kolbens (80) in der axialen Öffnung (77),
wodurch ein teleskopartig ausgebildetes, in das Ende eines Kerns (60) einer Rolle (61) von Bahnmaterial eingesetztes Kern-Steckelement (56) gehalten und freigegeben werden kann, um dadurch eine Materialvorrats-Zuführungsrolle (61) für in der Mitte gefaltetes Kunststofffilm-Material lösbar zu tragen.

4. Verpackungsvorrichtung nach Anspruch 3, ferner mit einer Walze (86), die nahe der Zuführungsrollen-Trageeinrichtung angeordnet ist und gegen eine Zuführungsrolle (61) auf der Trageeinrichtung drückt und zur Zuführungsrolle gegenläufig rotiert, um die Rotation der Zuführungsrolle teilweise zu verzögern, dadurch einen Zug auf die Bahn (30), die von der Zuführungsrolle aus vorbewegt wird, aufzubringen und somit die Zuführungsform der sich vorwärtsbewegenden Bahn zum Abdichten des offenen Randes und zum Ausbilden der Querdichtungen zu verbessern.

5. Verpackungsvorrichtung nach Anspruch 1, 2 , 3 oder 4, bei der die Mittel zum Ausbilden einer linearen Dichtung aufweisen:
einen Drehzylinder (36), der zur Anlage gegen ein von den Vorwärtsbewegungsmitteln vorbewegtes Kunststofffilm-Material angeordnet und aus einem thermisch leitenden Polymermaterial hergestellt ist, um von dort Wärme schnell abzuleiten;
einen Abdichtungsdraht (37), der aus einem elektrisch leitenden Material gebildet ist, das um den Umfang des Polymerzylinders (36) herumgewickelt ist;
Mittel zum Anlegen einer Spannung an den Abdichtungsdraht (37), um die Temperatur des Abdichtungsdrahtes auf eine erhöhte Temperatur anzuheben, die Kunststofffilm-Material abdichten wird, so daß, wenn das Kunststofffilm-Material gegen den Zylinder (36) läuft, die erwärmten Drähte das Kunststofffilm-Material abdichten, und
Mittel (41) zum Halten einer Ruhespannung in dem Abdichtungsdraht, die den Draht (37) auf einer Temperatur hält, die unterhalb der Temperatur liegt, bei der der Draht Kunststoff abdichten wird, die aber ermöglicht, daß der Draht auf Anforderung eine Abdichtungstemperatur schneller erreicht, und gestattet, die Größe sowie die Folgen der Erwärmungsperioden des Drahtes zu verringern.

6. Verpackungsvorrichtung nach Anspruch 5, ferner mit:
einer ersten Drehwelle (24), auf der der Polymerzylinder montiert ist und nahe deren entgegengesetzten Enden ein Paar angetriebene Walzen (25) angebracht sind;
einer zweiten Drehwelle (26), die parallel zur ersten Drehwelle verläuft;
einem Paar Antriebswalzen (27), die auf der zweiten Welle angebracht sind und jeweils gegenüber den angetriebenen Walzen (25) angeordnet sind,
wobei die erste und die zweite Welle (24, 26) ausreichend dicht beieinander angeordnet sind, um die Antriebswalzen (27) zu drehen und so die angetriebenen Walzen (25) in Drehung zu versetzen, unabhängig von dem Vorhandensein oder dem Fehlen von Kunststofffilm-Material zwischen den Antriebswalzen und den angetriebenen Walzen.

7. Verpackungsvorrichtung nach Anspruch 6, ferner mit:
einem Paar Filmführungen (41, 42) in der Form von nebeneinander liegenden Stangen, die parallel zur ersten und zur zweiten Welle (24, 26) verlaufen und in seitlicher Richtung entfernt von der Stelle, bei der die Antriebswalzen (27) und die angetriebenen Walzen (25) aufeinandertreffen, in eine Richtung zu den Antriebswalzen hin angeordnet sind, damit das Kunststofffilm-Material auf die Antriebswalzen trifft, bevor es auf die angetriebenen Walzen und den Polymerzylinder (36) trifft, um so das sich vorwärtsbewegende Kunststofffilm-Material (30) effektiver anzutreiben, und
einer Mehrzahl von Führungsrohren (43, 44), die von den Filmführungsstangen (41, 42) nach unten herunterhängen, um einen sich vorwärtsbewegenden Kunststofffilm zwischen die Antriebswalzen und die angetriebenen Walzen weiter zu führen und um zu verhindern, daß sich der Kunststofffilm um eine der beiden Wellen (24, 26) herumwickelt, wenn er sich nach unten vorbewegt, wobei wenigstens einige der Führungsrohre (44) flexible untere Abschnitte (45) aufweisen, um ein Reißen eines sich vorwärtsbewegenden Kunststofffilms zu vermeiden, immer wenn er die flexiblen unteren Abschnitte berührt.

8. Verpackungsvorrichtung nach einem der Ansprüche 1 bis 7, bei der die Mittel zum Abdichten in Querrichtung aufweisen:
einen Querschneidedraht (46), der im wesentlichen senkrecht zur Lage des durch die Vorwärtsbewegungsmittel vorbewegten Kunststofffilm-Materials verläuft, um in Kontakt mit dem Draht stehenden Kunststoff abzutrennen, wenn der Draht auf eine Temperatur erwärmt ist, die Kunststoff abdichten und abtrennen wird;
Einrichtungen zum Erwärmen des Drahtes (46) auf eine Temperatur, die Kunststofffilm-Material abtrennen wird;
eine flexible, parallel zu dem Draht verlaufende Betätigungsstange (47) für die Abdichtung;
eine flexible Abdichtungswalze (50), die parallel zu dem Draht und der Stange auf der der Stange gegenüberliegenden Seite des Drahtes verläuft, und
eine Antriebseinrichtung, die zum Betrieb mit der Betätigungsstange in Verbindung ist, um die Stange gegen den Draht und den Draht gegen die Abdichtungswalze zu bewegen und dadurch das Kunststofffilm-Material abzudichten und abzutrennen, das zwischen dem Abdichtungsdraht und der Abdichtungswalze hindurchläuft.

9. Verpackungsvorrichtung nach Anspruch 8, bei der:
die Antriebseinrichtung zwei Spulensolenoide (51) zum wunschgemäßen Antreiben der Betätigungsstange (47) in entgegengesetzte Richtungen aufweist; und
bei der die Einrichtungen zum Erwärmen des Drahtes ferner aufweisen
Mittel, die ein Erwärmen des Drahtes verhindern, bis die Betätigungsstange mit der flexiblen Abdichtungswalze (50) in Kontakt ist, und
Mittel zum Halten des Abdichtungsdrahtes bei einer Ruhetemperatur, die oberhalb der Umgebungstemperatur, jedoch unterhalb der Temperatur liegt, bei der die Abdichtung stattfindet, um dadurch für ein schnelleres Anheben des Abdichtungsdrahtes auf eine Abdichtungstemperatur zu sorgen, wenn immer es gewünscht wird, und um für ein Reduzieren der Größe und der Folgen der Erwärmungsperioden des Drahtes zu sorgen.

10. Verpackungsvorrichtung nach Anspruch 8 oder 9, bei dem der Querschneidedraht (46) ferner aufweist:
jeweils eine Feder an jedem seiner entgegengesetzten Enden, um den Querschneidedraht gegen den Zug der Federn federnd zu befestigen, und
Mittel (54, 55) an der Vorrichtung zur Aufnahme der Federn, so daß der Abdichtungsdraht bei Fehlen einer anderen Befestigung positioniert und in Position gehalten werden kann, und zum Straffhalten des Drahtes während einer Ausdehnung und einer Zusammenziehung des Drahtes bei seinen Erwärmungsperioden.

11. Verfahren zum Herstellen von Verpackungskissen, die einen mit einem geschäumten Polymer gefüllten Kunststoffbeutel aufweisen, wobei die Kissen zu Anfang aus einem Kunststoffbeutel (21) gebildet sind, der mit einem schäumbaren Material gefüllt ist, das reagiert und sodann zur Ausbildung von Polymerschaum erhärtet, mit:
- Vorwärtsbewegen einer Folie aus Kunststofffilm-Material (30), das in der Mitte gefaltet worden ist, um eine Doppelbahn mit einem geschlossenen Rand, der durch die Mittelfalte festgelegt ist, und einem offenen Rand zu bilden, der durch die beieinanderliegenden Ränder der Folie festgelegt ist;
- Injizieren einer schäumbaren Mischung in die in der Mitte gefaltete Bahn zwischen die zwei Faltabschnitte der Folie;
- Bilden einer im wesentlichen linearen Längsnaht längs und im wesentlichen parallel zum offenen Rand, um dadurch den offenen Rand abzudichten;
- Abdichten der Bahn in Querrichtung, nachdem eine schäumbare Mischung injiziert worden ist, und gleichzeitiges Trennen eines hergestellten und gefüllten Beutels (21) von dem vorbewegten Filmmaterial und
- periodisches Unterbrechen der linearen Dichtung zwischen jeder einzelnen Querdichtung, um einen linearen nicht abgedichteten Abschnitt (38) längs des ansonsten linear abgedichteten Randes zu erzeugen.

12. Verfahren nach Anspruch 11, bei dem der Schritt des periodischen Unterbrechens der linearen Dichtung zum Erzeugen eines nicht abgedichteten Abschnitts umfaßt das Unterbrechen der linearen Dichtung einmal zwischen jeder entsprechenden Querdichtung und der nächsten entsprechenden Querdichtung, während die Bahn sich kontinuierlich vorbewegt, und für eine Zeitdauer, die einen kleinen Bruchteil der Zeit darstellt, die zum Abdichten des offenen Randes zwischen Querdichtungen erforderlich ist, um so einen Beutel mit einer Öffnung (38) in einem seiner Seitenränder zum Entlüften der bei dem Schäumen der schäumbaren Mischung erzeugten Gase herzustellen, so daß die resultierende Öffnung einen verhältnismäßig kleinen Anteil an der Länge der Gesamtdichtung darstellt, um dadurch eine Entlüftungsöffnung auszubilden, die groß genug ist, um Gase entweichen zu lassen, jedoch klein genug ist, um im wesentlichen zu verhindern, daß Schaum aus dem hergestellten und gefüllten Beutel entweicht.

## Revendications

1. Appareil (20) de conditionnement destiné à former des coussins de conditionnement du type qui comprend un sac de matière plastique rempli d'une mousse solide, et dans lequel les coussins sont initialement formés d'un sac (21) de matière plastique rempli d'un matériau qui peut former une mousse et qui réagit puis durcit en formant une mousse solide, l'appareil comprenant :
- un dispositif (25, 27) destiné à faire avancer une feuille (30) d'une matière sous forme d'un film de matière plastique qui a été pliée au centre pour la formation d'une nappe double ayant un bord fermé délimité par le pli central et un bord ouvert délimité par les bords adjacents de la feuille,
- un dispositif (32) d'injection d'une composition capable de former une mousse dans la nappe formant le pli central entre les deux parties pliées de la feuille,
- un dispositif (37) destiné à former une soudure pratiquement linéaire le long du bord ouvert et pratiquement parallèle au bord ouvert pour la formation d'une soudure longitudinale linéaire le long du bord ouvert de la nappe,
- un dispositif (46) destiné à souder transversalement la nappe après que la composition qui peut mousser a été injectée, et à séparer simultanément un sac mis en forme et rempli du matériau sous forme du film qui avance, et
- un dispositif destiné à interrompre périodiquement la soudure linéaire entre les soudures transversales respectives pour la formation d'une partie linéaire non soudée (38) le long du bord qui par ailleurs est soudé linéairement.

2. Appareil de conditionnement selon la revendication 1, dans lequel le dispositif d'interruption périodique comporte un dispositif destiné à interrompre la soudure linéaire une fois entre chaque soudure transversale respective et la soudure transversale respective suivante pendant que la nappe avance de façon continue et pendant une période qui représente une petite fraction du temps nécessaire au soudage du bord ouvert entre les soudures transversales si bien que l'ouverture résultante représente une fraction proportionnellement petite de la longueur de la soudure globale, afin qu'une ouverture (38) de ventilation soit formée à un bord latéral, cette ouverture étant suffisamment grande pour que les gaz s'échappent mais suffisamment petite pour qu'elle empêche pratiquement la mousse de s'échapper du sac mis en forme et rempli.

3. Appareil de conditionnement selon la revendication 1 ou 2, comprenant en outre :
une glissière (71) de réception d'un bouchon d'âme ayant un canal de réception du bouchon (56) d'âme, le canal ayant des organes supérieur (72), inférieur (73), d'appui (74) et arrière (75),
un organe (76) formant siège solidaire d'une première extrémité de la goulotte, l'organe formant siège ayant une ouverture axiale (77) de diamètre prédéterminé disposé longitudinalement dans l'organe formant siège (76) et l'organe d'appui (74) de la goulotte, l'ouverture axiale (77) étant destinée à loger un bouchon d'âme (56),
un plongeur (80) monté télescopiquement dans l'ouverture axiale (77) de l'organe formant siège (76) afin qu'il se déplace entre des positions avancée et reculée et comportant une partie d'extrémité (81) qui dépasse au-delà de l'extrémité externe de l'organe formant siège (76),
un dispositif à ressort (82) rappelant l'organe à plongeur (80) vers sa position avancée, et
un dispositif à broche (84) destiné à maintenir le plongeur (80) dans l'ouverture axiale (77),
si bien qu'un bouchon d'âme télescopique (56) introduit dans l'extrémité d'une âme (60) d'un rouleau (61) d'une matière en feuille peut être retenu et libéré afin qu'il porte temporairement un rouleau (61) débiteur du film de matière plastique plié au centre.

4. Appareil de conditionnement selon la revendication 3, comprenant en outre un rouleau (86) adjacent au dispositif de support du rouleau débiteur et destiné à être en appui contre un rouleau débiteur (61) placé sur le dispositif de support et à tourner en sens opposé au sens du rouleau débiteur afin qu'il retarde partiellement la rotation du rouleau débiteur et applique ainsi une tension à la nappe (30) qui avance à partir du rouleau débiteur afin que la présentation de la nappe qui avance soit facilitée pour le soudage du bord ouvert et la formation des soudures transversales.

5. Appareil de conditionnement selon la revendication 1, 2, 3 ou 4, dans lequel le dispositif destiné à former une soudure linéaire comprend :
un cylindre rotatif (36) disposé afin qu'il soit en appui contre un film de matière plastique qui avance sous l'action du dispositif d'avance et qui est formé d'une matière polymère conductrice de la chaleur destinée à dissiper rapidement la chaleur,
un fil de soudage (37) formé d'un matériau conducteur de l'électricité enroulé à la circonférence du cylindre polymère (36),
un dispositif d'application d'une tension au fil de soudage (37) afin que la température du fil de soudage soit portée à une température de chauffage qui soude le film de matière plastique, si bien que, lorsque le film de matière plastique passe contre le cylindre (36), le fil chauffé soude le film de matière plastique, et
un dispositif (41) destiné à maintenir une tension d'attente dans le fil de soudage afin que ce fil (37) soit maintenu à une température inférieure à celle à laquelle le fil provoque un soudage de matière plastique, mais qui permet au fil d'atteindre très rapidement une température de soudage sur commande, et à réduire l'amplitude et les conséquences des excursions thermiques du fil.

6. Appareil de conditionnement selon la revendication 5, comprenant en outre :
un premier arbre rotatif (24), sur lequel est monté le cylindre polymère, et une paire de rouleaux menés (25) placés en face des extrémités opposées,
un second arbre rotatif (26) parallèle au premier arbre rotatif,
une paire de rouleaux menants (27) placés sur le second arbre et disposés respectivement en face des rouleaux menés (25), et
dans lequel le premier et le second arbre (24, 26) sont positionnés suffisamment près pour que la rotation des rouleaux menants (27) provoque la rotation des rouleaux menés (25) indépendamment de la présence ou de l'absence du film de matière plastique entre les rouleaux menants et les rouleaux menés.

7. Appareil de conditionnement selon la revendication 6, comprenant en outre :
une paire de guides (41, 42) de film sous forme de barres adjacentes, parallèles au premier et au second arbre (29, 26) et positionnées latéralement à distance de la position à laquelle les rouleaux menants (27) et les rouleaux menés (25) se rejoignent vers les rouleaux menants afin que le film de matière plastique soit encouragé à rejoindre les rouleaux menants avant de rejoindre les rouleaux menés et le cylindre polymère (36), avec entraînement plus efficace de cette manière du film de matière plastique qui avance (30), et
plusieurs baguettes (43, 44) de guidage dépassant sous les barres (41, 42) de guidage de film afin qu'elles dirigent un film de matière plastique qui avance entre les rouleaux menants et les rouleaux menés, et empêchent l'enroulement du film de matière plastique autour de l'un ou l'autre des arbres (24, 26) lors de l'avance vers le bas, certaines au moins des baguettes de guidage (44) ayant des parties inférieures flexibles (45) destinées à empêcher la déchirure du film de matière plastique qui avance lorsqu'il vient au contact des parties inférieures flexibles.

8. Appareil de conditionnement selon l'une quelconque des revendications 1 à 7, dans lequel le dispositif de soudage transversal comprend :
un fil (46) de coupe transversale placé pratiquement perpendiculairement à la position du film de matière plastique qui avance sous l'action du dispositif d'avance afin qu'il coupe la matière plastique au contact du fil lorsque celui-ci est chauffé à une température qui provoque un soudage et une découpe de la matière plastique,
un dispositif de chauffage du fil (46) à une température qui provoque la coupe du film de matière plastique,
une barre flexible (47) d'organe de manoeuvre de soudage parallèle au fil,
un rouleau flexible (50) de soudage parallèle au fil et à la barre, et du côté opposé au fil par rapport à la barre, et
un organe d'entraînement raccordé à la barre de manoeuvre et destiné à entraîner la barre contre le fil et le fil contre le rouleau de soudure afin que le film de matière plastique soit soudé et coupé lors du passage entre le fil de soudage et le rouleau de soudage.

9. Appareil de conditionnement selon la revendication 8, dans lequel :
l'organe d'entraînement est un électro-aimant (51) à deux enroulements destiné à entraîner la barre (47) de manoeuvre en sens opposés à volonté, et
dans lequel le dispositif de chauffage du fil comporte en outre :
un dispositif destiné à empêcher le chauffage du fil jusqu'à ce que la barre de manoeuvre soit au contact du rouleau flexible de soudage (50), et
un dispositif destiné à maintenir le fil de soudage à une température d'attente qui est supérieure à la température ambiante, mais inférieure à la température à laquelle le soudage est réalisé afin que l'élévation du fil de soudage à la température de soudage soit plus rapide lorsqu'il est nécessaire, et que l'amplitude et les conséquences des excursions thermiques du fil soient réduites.

10. Appareil de conditionnement selon la revendication 8 ou 9, dans lequel le fil de coupe transversale (46) comporte en outre :
un ressort respectif à chacune des extrémités opposées pour le montage élastique du fil de coupe transversale malgré la force de tension des ressorts, et
un dispositif (54, 55) placé sur l'appareil et destiné à recevoir les ressorts de manière que le fil de soudage puisse être positionné et maintenu en position en l'absence de tout autre dispositif de fixation et afin que le filtre soit maintenu tendu pendant la dilatation et la contraction du fil au cours de ses excursions thermiques.

11. Procédé de formation de coussins de conditionnement du type qui comprend un sac de matière plastique rempli d'une mousse d'un polymère, et dans lequel les coussins sont formés initialement d'un sac de matière plastique (21) rempli d'un matériau qui peut former une mousse et qui réagit puis durcit en formant une mousse polymère, le procédé comprenant :
- l'avance d'une feuille d'une matière (30) de film de matière plastique qui a été pliée au centre pour la formation d'une nappe double avec un bord fermé délimité par le pli central et un bord ouvert délimité par les bords adjacents de la feuille,
- l'injection d'une composition pouvant former une mousse dans la nappe ayant le pli central entre les deux parties pliées de la feuille,
- la formation d'une soudure longitudinale pratiquement linéaire sur la longueur du bord ouvert et en direction pratiquement parallèle à ce bord afin que le bord ouvert soit soudé,
- le soudage transversal de la nappe après que la composition qui peut former une mousse a été injectée, et la séparation simultanée d'un sac mis en forme et rempli (21) du film qui avance, et
- l'interruption périodique de la soudure linéaire entre les soudures transversales respectives pour la formation d'une partie linéaire non soudée (38) le long du bord qui est par ailleurs soudé linéairement.

12. Procédé selon la revendication 11, dans lequel l'étape d'interruption périodique de la soudure linéaire pour la formation d'une partie non soudée comprend l'interruption de la soudure linéaire une fois entre chaque soudure transversale respective et la soudure transversale respective suivante lorsque la nappe avance de façon continue et pendant un temps qui représente une petite fraction du temps nécessaire au soudage du bord ouvert entre les soudures transversales afin qu'un sac soit formé avec une ouverture (38) à un bord latéral pour la ventilation des gaz produits lorsque la composition qui peut former une mousse forme réellement une mousse, et ainsi l'ouverture résultante représente une fraction proportionnellement petite de la longueur de la soudure entière afin qu'une ouverture de ventilation soit formée avec des dimensions suffisamment grandes pour que les gaz s'échappent mais suffisamment petites pour que la mousse ne puisse pratiquement pas s'échapper du sac mis en forme et rempli.
